# FASCICULE DE BREVET EUROPEEN

(11) **EP 3 047 193 B1**
(45) Date de publication et mention de la délivrance du brevet: **09.08.2017**
(21) Numéro de dépôt: 14752902.8
(22) Date de dépôt: 27.06.2014
(51) Int. Cl.: F16L 59/14, F17C 3/08, F16L 27/02, F16L 51/02, F16L 59/12, F16L 59/21, F16L 27/12, F16L 51/03, F16L 3/16, B63B 27/24, B63B 27/25, F16L 27/08

(54) **DISPOSITIF DE TRANSFERT DE FLUIDE ET INSTALLATION COMPRENANT UN TEL DISPOSITIF**
FLÜSSIGKEITSÜBERTRAGUNGSVORRICHTUNG UND EINRICHTUNG MIT SOLCH EINER VORRICHTUNG
FLUID TRANSFER DEVICE AND APPARATUS INCLUDING SUCH A DEVICE

(30) Priorité: 19.09.2013 FR 1359021
(43) Date de publication de la demande: 27.07.2016
(73) Titulaire: L'Air Liquide Société Anonyme pour l'Etude et l'Exploitation des Procédés Georges Claude, 75007 Paris (FR)
(72) Inventeur: FOURNEL, Jean-Luc, F-57530 Silly-Sur-Nied (FR); NOVET, Thierry, F-38190 Bernin (FR)
(74) Mandataire: De Cuenca, Emmanuel Jaime
(86) Numéro de dépôt international: PCT/FR2014/051638
(87) Numéro de publication internationale: WO 2015/040292

(56) Documents cités:
- DE-B- 1 218 821
- GB-A- 1 202 557
- US-A- 2 561 540
- US-A- 2 889 993
- B. SARKAR ET AL: "DESIGN, ANALYSIS AND TEST CONCEPT FOR PROTOTYPE CRYOLINE OF ITER", AIP CONFERENCE PROCEEDINGS, vol. 985, 20 juillet 2007 (2007-07-20), pages 1716-1723, XP055094586, ISSN: 0094-243X, DOI: 10.1063/1.2908542
- L. SERIO ET AL: "CHALLENGES FOR CRYOGENICS AT ITER", AIP CONFERENCE PROCEEDINGS, vol. 13, 1 janvier 2010 (2010-01-01), pages 651-662, XP055094592, ISSN: 0094-243X, DOI: 10.1063/1.3422415
- SONG Y ET AL: "Design of the ITER TF Magnet Feeder Systems", IEEE TRANSACTIONS ON APPLIED SUPERCONDUCTIVITY, IEEE SERVICE CENTER, LOS ALAMITOS, CA, US, vol. 20, no. 3, 1 juin 2010 (2010-06-01), pages 1710-1713, XP011307544, ISSN: 1051-8223
- ZHU YINFENG ET AL: "Conceptual Design and Analysis of Cold Mass Support of the CS3U Feeder for the ITER", PLASMA SCIENCE AND TECHNOLOGY, INSTITUTE OF PHYSICS PUBLISHING, BRISTOL, GB, vol. 15, no. 6, 25 juin 2013 (2013-06-25), pages 599-604, XP020245506, ISSN: 1009-0630, DOI: 10.1088/1009-0630/15/6/20
- KALININ V ET AL: "ITER cryogenic system", FUSION ENGINEERING AND DESIGN, ELSEVIER SCIENCE PUBLISHERS, AMSTERDAM, NL, vol. 81, no. 23-24, 1 novembre 2006 (2006-11-01), pages 2589-2595, XP027974495, ISSN: 0920-3796 [extrait le 2006-11-01]

## Description

La présente invention concerne un dispositif de transfert de fluide et une installation comprenant un tel dispositif.

L'invention concerne plus particulièrement un dispositif de transfert de fluide entre deux extrémités destinées à être reliées respectivement à deux structures séparées telles que deux bâtiments distincts, le dispositif comprenant une canalisation rigide à double enveloppes s'étendant selon un axe longitudinal, la canalisation comprenant une enveloppe extérieure abritant, dans son volume interne destiné à être mis sous vide, au moins une conduite interne de transfert de fluide, la canalisation comprenant, à une première extrémité, une première liaison rigide de l'enveloppe extérieure avec la première structure et, à une seconde extrémité, une seconde liaison rigide de l'enveloppe extérieure avec la seconde structure, les première et seconde extrémités de l'enveloppe extérieure étant reliées rigidement à la au moins une conduite interne, la canalisation comportant un système de rattrapage de déplacements relatifs entre ses première et seconde extrémités.

Des canalisations rigides à double enveloppes sous vide reliées à des structures indépendantes (bâtiments distincts par exemple) doivent comprendre un système de rattrapage de déplacements pour éviter une rupture du fait de déplacement relatifs générés par des déplacements de leurs points d'ancrages d'extrémités ou du fait de contractions due au froid.

Un système connu utilise une portion de canalisation coudée en S ou en double S dit système «de type manivelle selon les trois axes XYZ » (typiquement quatre changements de directions à 90 degrés).

Ce type de système permet d'accepter des contraintes raisonnables dans l'équipement mais provoque des pertes de charges additionnelles dans les circuits de fluide.

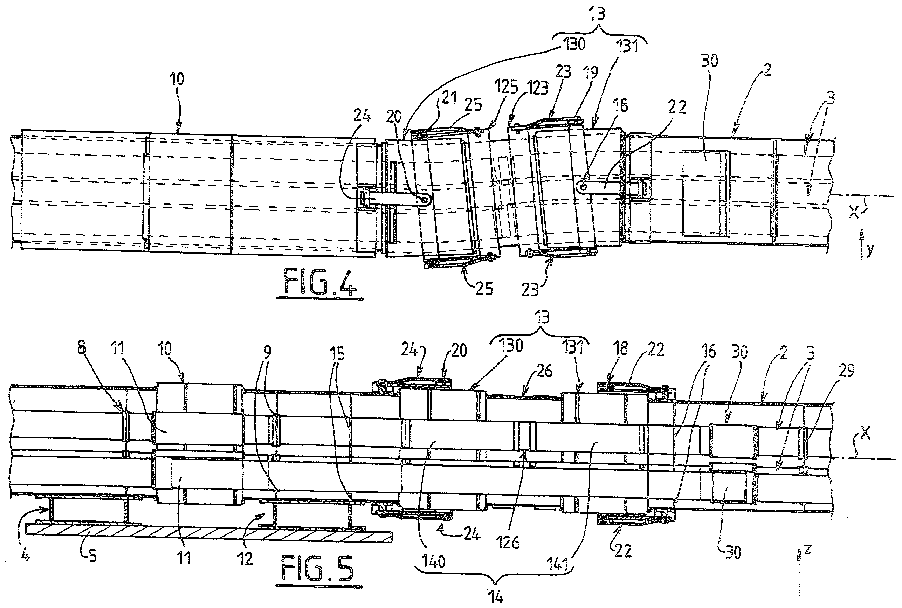

De plus, ce type de système prend un volume important dans l'installation correspondante (surface au sol notamment). En outre, ce type d'architecture est relativement instable verticalement. Pour résoudre ce problème de stabilité verticale, une butée verticale est prévue qui bloque le système verticalement. Les changements de direction du fluide induisent des effets dit « de fond » dans les tuyauteries et/ou au niveau des appuis (effort interne qui allonge la manivelle). Ceci contrarie la stabilité des tuyauteries. Un dispositif de transfert de fluide entre deux structures séparées est également dévoilé par le document "Design, Analysis and test concept for prototype cryoline of ITER", des auteurs B. Sakar et AL, publié par AIP conférence proceedings, vol. 985, voir en particulier le dispositif proposé par la figure 4, page 1719. Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que le système de rattrapage de déplacements comprend au moins une zone flexible et au moins une zone élastique, ladite au moins une zone élastique étant élastique selon la direction longitudinale, le système de rattrapage de déplacements comprenant en outre une liaison coulissante selon l'axe longitudinal entre l'enveloppe extérieure et la première structure et un mécanisme de cardans contenant deux cardans et reliant mécaniquement les deux extrémité de la zone flexible.

Par ailleurs, des modes de réalisation de l'invention peuvent comporter l'une ou plusieurs des caractéristiques suivantes :
- les deux cardans ont chacun deux axes d'articulation distincts perpendiculaires à l'axe longitudinal,
- l'un des deux cardans possède deux axes d'articulations parallèles respectivement aux deux axes d'articulations de l'autre cardan,
- lorsque le dispositif est en position montée, deux premiers axes d'articulations parallèles des cardans sont situés dans un plan vertical pour autoriser un débattement horizontal limité de la canalisation tandis que les deux autres seconds axes d'articulations parallèles sont situés dans un plan horizontal pour autoriser un débattement horizontal limité de la zone flexible de la canalisation,
- la direction longitudinale, les deux premiers axes d'articulations sont situés entre les deux seconds axes d'articulations,
- la zone élastique comprend une première portion élastique de l'enveloppe extérieure et une première portion élastique de la au moins une conduite interne, ladite portion élastique de la au moins une conduite interne étant située entre deux liaisons rigides entre l'enveloppe extérieure et la au moins une conduite interne,
- la première portion élastique de l'enveloppe extérieure et la première portion élastique de la au moins une conduite interne comprennent chacune un soufflet élastique,
- la zone flexible comprend une seconde portion flexible et élastique de l'enveloppe extérieure et une seconde portion flexible de la au moins une conduite interne, le mécanisme de cardans relie les deux extrémités de l'enveloppe extérieure situées respectivement de part et d'autre de la seconde portion flexible et élastique de l'enveloppe extérieure,
- la seconde portion flexible et élastique de l'enveloppe extérieure comprend deux soufflets raccordés en série de part et d'autre d'une portion rigide centrale,
- la seconde portion flexible de la au moins une conduite interne comprend deux flexibles raccordés en série de part et d'autre d'une portion rigide centrale,
- un premier cardan relie la portion rigide centrale de l'enveloppe extérieure à un premier côté de l'enveloppe extérieure orienté vers la première structure tandis qu'un second cadrant relie la portion rigide centrale de l'enveloppe extérieure à second côté de l'enveloppe extérieure orienté vers la seconde structure,
- chaque cardan comprend une première paire de bras de liaison respectifs ayant une première extrémité reliée rigidement à la portion rigide centrale et une seconde extrémité articulée sur une première bague de liaison respective disposée autour d'un flexible respectif, chaque cardan comprenant une seconde paire de bras de liaison respectifs ayant une première extrémité articulée sur la première bague de liaison respective, et une second extrémité reliée rigidement à un côté concerné de l'enveloppe extérieure,
- de part et d'autre de la seconde portion flexible de la au moins une conduite interne, la au moins une conduite interne est reliée à l'enveloppe extérieure via des liaisons respectives coulissantes selon une direction parallèle à l'axe longitudinal de la canalisation, c'est-à-dire que la seconde portion flexible de l'enveloppe extérieure et la seconde portion flexible de la au moins une conduite interne sont situées entre deux liaisons coulissantes entre l'enveloppe extérieure et la au moins une conduite interne,
- la zone élastique comprend une troisième portion élastique de la au moins une conduite interne,
- la troisième portion élastique est située entre le mécanisme à cardans et une liaison rigide entre l'enveloppe extérieure et la au moins une conduite interne du côté de la seconde structure,
- les deux cardans sont disposés en série le long de la canalisation selon la direction longitudinale,
- l'un au moins des flexibles comprend un soufflet revêtu d'une tresse empêchant la variation de longueur du soufflet selon la direction longitudinale.
- la canalisation a une forme générale rectiligne en l'absence d'un différentiel de contraintes ou en l'absence de déplacements relatifs entre ses extrémités et en ce que le système de rattrapage de déplacements autorise une déformation localisée limitée en forme de S de la conduite dans le cas contraire.

L'invention concerne également une installation comprenant deux structures séparées reliée par un dispositif de transfert de fluide conforme à l'une quelconque des caractéristiques ci-dessus ou ci-après, dans laquelle la première structure comprend l'un parmi : un bâtiment, une source de fluide cryogénique, un pont, tandis que la seconde structure comprend l'un parmi : un bâtiment, une enceinte abritant un appareil de génération d'un plasma du type « Tokamak ».

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue de côté, en coupe schématique et partielle, illustrant un exemple de réalisation possible de l'invention,
- la figure 2 représente une vue en demi-coupe longitudinale illustrant un exemple de structure de soufflet susceptible d'être utilisé dans le dispositif selon l'invention,
- la figure 3 représente une vue en perspective, partiellement en transparence, illustrant de façon schématique et partielle, d'une installation munie d'un dispositif de transfert selon l'invention,
- la figure 4 représente une vue de dessus schématique et partiellement en transparence, illustrant la canalisation du dispositif des figures 1 et 3,
- la figure 5 représente une vue de côté schématique et en coupe longitudinale illustrant la canalisation de la figure 5,
- la figure 6 représente une vue agrandie d'un détail de la figure 4 illustrant un exemple de mécanisme de cardan du dispositif.

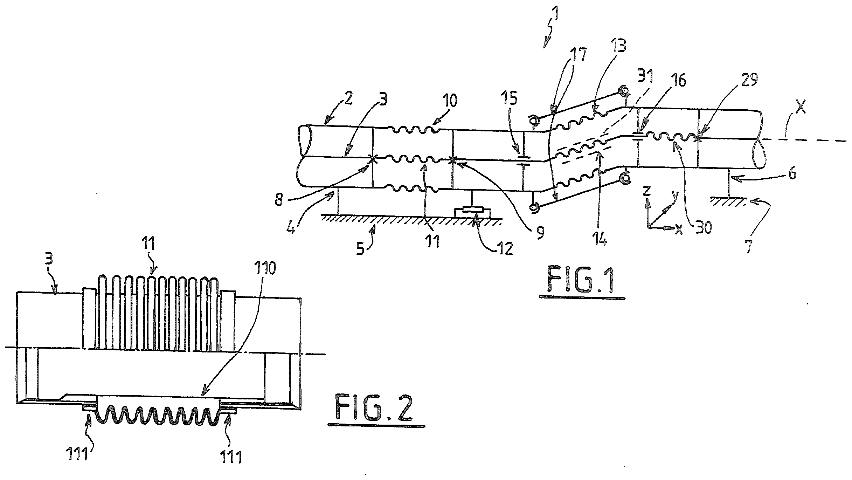

La figure 1 illustre de façon schématique et partielle un exemple de réalisation de dispositif de transfert de fluide entre deux extrémités reliées respectivement à deux structures 5, 7 séparées. Chaque structure 5, 7 peut être un bâtiment, un pont ou toute autre structure physique. Le dispositif 1 de transfert est prévu pour assurer un transfert de fluide, par exemple, cryogénique, entre les deux structures 5, 7 tout en résistant à des déplacements relatifs des deux structures 5, 7 (en cas de séisme ou de vent par exemple) ou du fait des dilatation/rétractations au sein du dispositif.

Le dispositif 1 comprend une canalisation rigide rectiligne formée essentiellement de tubes métalliques. Cette canalisation est du type à double enveloppe et s'étendent selon un axe longitudinal x.

La canalisation comprend une enveloppe 2 extérieure par exemple en métal ou en inox abritant, dans son volume interne destiné à être mis sous vide, au moins une conduite 3 interne de transfert de fluide (c'est-à-dire au moins une conduite interne en métal ou en inox destinée à véhiculer du fluide).

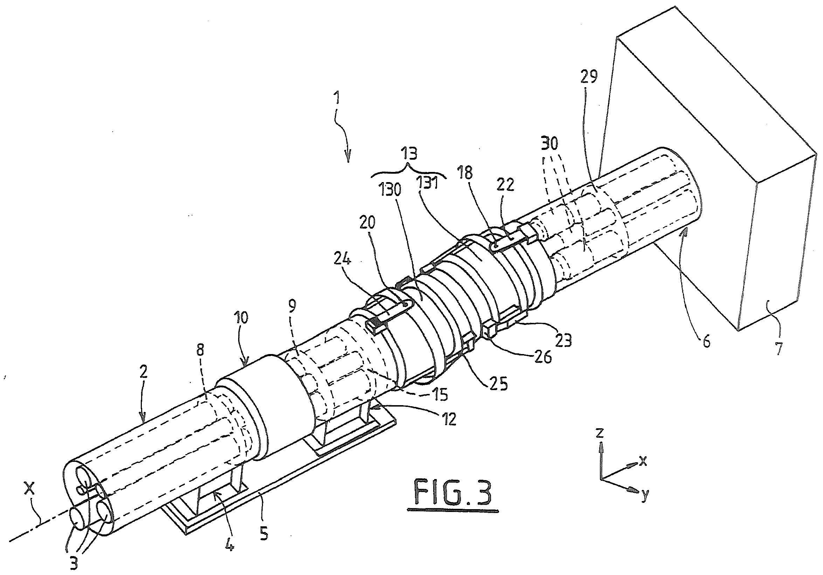

Par soucis de simplification, seule une conduite 3 interne est représentée schématiquement par un trait continu à la figure 1. Bien entendu, et comme illustré plus en détail aux figures 3 à 5, plusieurs conduites 3 internes indépendantes parallèles peuvent être logées dans l'enveloppe 2 extérieure (les éléments identiques sont désignés par les mêmes numériques sur les différentes figures).

La canalisation comporte, à une première extrémité, une première liaison 4 rigide de l'enveloppe 2 extérieure avec la première structure 5 et, à une seconde extrémité, une seconde liaison 6 rigide de l'enveloppe 2 extérieure avec la seconde structure 7.

Les première et seconde extrémités de l'enveloppe 2 extérieure sont reliées rigidement à la au moins une conduite 3 interne.

Classiquement, la canalisation comporte un système de rattrapage de déplacements relatifs entre ses première 4 et seconde extrémités 6 et également pour rattraper les dilatations différentielles entre les parties constitutives.

Ce système de rattrapage de déplacements comprend au moins une zone flexible et au moins une zone élastique (distinctes ou confondues). La zone élastique 10, 11, 30 confère une élasticité à au moins une partie de la canalisation selon la direction longitudinale (x).

De plus, le dispositif comprend une liaison coulissante 12 selon l'axe longitudinal (x) entre l'enveloppe 2 extérieure et la première structure 5. Le dispositif comprend en outre mécanisme 17 contenant deux cardans et reliant les deux extrémités de la zone flexible 13, 14. Comme décrit plus en détail ci-après, les cardans ont de préférence chacun deux axes d'articulation 18, 20, 19, 21 distincts perpendiculaires à l'axe longitudinal (x).

La zone élastique comprend une première portion 10 élastique de l'enveloppe extérieure 2 et une première portion élastique 11 de la au moins une conduite 3 interne.

De préférence, et comme illustré aux figures 1 et 5, la première portion 10 élastique de l'enveloppe extérieure 2 est concentrique à la première portion élastique 11 de la ou des conduites 3 interne. De plus, ladite portion élastique 11 de la au moins une conduite 3 interne est située de préférence entre deux liaisons rigides 8, 9 formées entre l'enveloppe extérieure 2 et la au moins une conduite 3 interne. Comme visible aux figures 3 et 5, les liaisons rigides 8, 9 formées entre l'enveloppe extérieure 2 et la au moins une conduite 3 interne peuvent comporter chacune un disque d'espacement disposé transversalement à l'intérieur de l'enveloppe extérieure 2 et muni d'orifice pour le passage et le maintien des conduites 3 internes. Les liaisons entre l'enveloppe extérieure 2 et les conduites 3 internes peuvent être réalisées via ces disques 8, 9 d'espacement.

Comme illustré schématiquement à la figure 1, chaque portion 10, 11 élastique peut être formée d'un soufflet.

La première portion élastique 11 de la au moins une conduite 3 interne permet un déplacement axial des conduites 3 interne par contraction ou extension du soufflet. De même, la première portion 10 élastique de l'enveloppe extérieure 2 permet un déplacement axial de l'enveloppe 2 extérieure par contraction ou extension du soufflet.

La figure 2 illustre à titre d'exemple l'agencement d'un soufflet 11 d'une conduite 3 interne comprenant une onde métallique dont les deux extrémités sont reliées respectivement à deux bagues 111 soudées sur des portions de conduite 3. Classiquement et comme illustré, un manchon 110 cylindrique peut être placé à l'intérieur au regard des ondes pour limiter les perturbations au sein du fluide qui s'écoule dans la conduite 3.

Le zone 13, 14 flexible comprend quant à elle une seconde portion 13 flexible et élastique de l'enveloppe extérieure 2 et une seconde portion 14 flexible de la au moins une conduite 3 interne. Le mécanisme 17 à cardans relie mécaniquement les deux extrémités de l'enveloppe extérieure 2 situées respectivement de part et d'autre de la seconde portion 13 flexible de l'enveloppe extérieure 2.

La seconde portion 13 flexible et élastique de l'enveloppe extérieure 2 peut comprendre un et de préférence deux soufflets 130, 131 comme décrits ci-après.

La seconde portion 13 flexible et élastique de l'enveloppe extérieure 2 permet un déplacement selon les directions (y) et (z) perpendiculaires à l'axe (x) longitudinal (y=direction transversal dans le plan horizontal, z= direction verticale) via une rotation localisée (rotule) de la tubulure. Une variation de longueur selon la direction longitudinale x bien que théoriquement possible des soufflets n'est pas possible car le mécanisme 17 de cardans est classiquement conformé pour empêcher la dilatation selon la direction longitudinale de la portion 13 flexible et élastique de l'enveloppe 2 extérieure.

De même, la seconde portion 14 flexible de la conduite 13 interne permet un déplacement selon les directions transversales (y) et (z).

Le mécanisme 17 de cardans, qui permet une rotation de la canalisation autour de la direction (y) et de la direction (z) assure la stabilité et la reprise d'efforts de cette partie.

En effet, le mécanisme 17 de cardan reprend les efforts dits de « fond de soufflets », c'est-à-dire les efforts de compression exercée par la pression extérieure (atmosphérique) sur les ondes des soufflets 130, 131 du fait de la pression interne nulle (vide d'isolations dans l'enveloppe 2 externe).

La seconde portion 14 flexible de la ou des conduites 3 comprend au moins un flexible.

Comme illustré schématiquement à la figure 1, chaque flexible 14 peut comprendre par exemple un soufflet revêtu d'une tresse 31 empêchant une variation de longueur du soufflet. C'est-à-dire que le flexible permet un mouvement de torsion de la canalisation mais pas d'allongement ni de rétractation longitudinal.

La seconde portion 14 flexible de la ou des conduites 3 internes est située entre deux liaisons 15, 16 coulissantes entre l'enveloppe extérieure 2 et les conduites 3 internes (cf. figure 1 et 5 par exemple via des disques d'espacement tels que décrits ci-dessus mais autorisant le guidage le déplacement relatif des conduites 3 interne par rapport à l'enveloppe externe 2).

Comme visible aux figures 3, 5 et 6 notamment, la seconde portion 13 flexible et élastique de l'enveloppe extérieure 2 peut comprendre deux soufflets 130, 131 raccordés en série (soudage ou autre) de part et d'autre d'une portion tubulaire rigide 26. De même, et comme visible à la figure 5, la seconde portion 14 flexible de chaque conduite 3 interne peut comprendre deux flexibles 140, 141 raccordés en série (soudage ou autre) de part et d'autre d'une portion tubulaire rigide 126.

La constitution des soufflets/flexibles en plusieurs tronçons 130, 131, 140, 141 en série permet de disposer des disques d'espacement internes entre deux soufflets/flexibles adjacents pour conserver l'espacement inter conduites 3 et permet de thermaliser (c'est-à-dire mettre en liaison thermique) les conduites 3 internes si besoin.

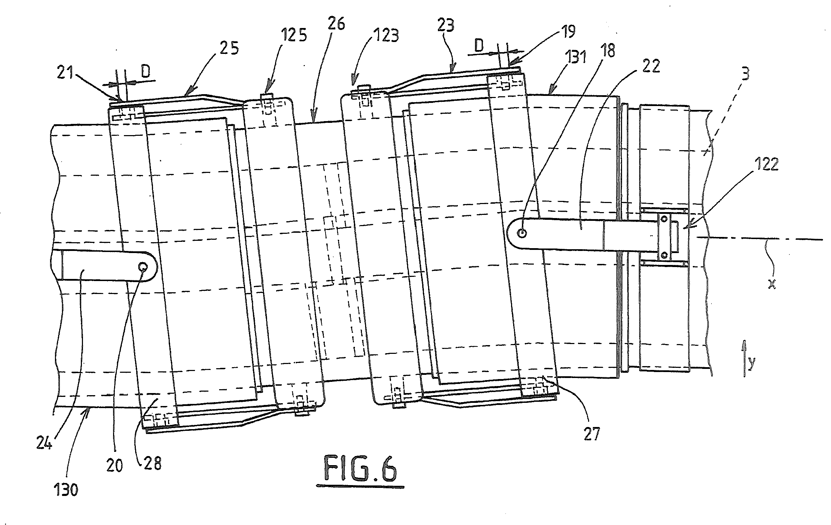

Comme illustré aux figures 3 à 5 et en particulier à la figure 6, un premier cardan relie la portion rigide 26 centrale de l'enveloppe 2 extérieure à un premier côté de l'enveloppe extérieure 2 (vers la première structure 5) tandis qu'un second cadrant relie la portion rigide 26 centrale de l'enveloppe 2 extérieure à un second côté de l'enveloppe extérieure 2 (vers la seconde structure 7).

Chaque cadran possède ainsi deux axes d'articulation distincts (respectivement 18, 19 et 20, 21) perpendiculaires à l'axe longitudinal (x). De plus, les deux axes d'articulation 18, 19 d'un cadran sont parallèles respectivement aux deux axes d'articulations 20, 21 de l'autre cardan 24, 25.

Deux premiers axes d'articulations 18, 20 parallèles des cardans sont situés dans un plan vertical pour autoriser un débattement horizontal (direction y) limité de la canalisation. Les deux axes d'articulation 19, 21 parallèles sont situés quant à eux dans un plan horizontal pour autoriser un débattement vertical (direction z) limité de la canalisation.

Plus précisément, chaque cardan peut comprendre une première paire de bras de liaison 23, 35 respectifs ayant une première extrémité 123, 125 reliée rigidement (soudage ou autre) à la portion rigide 26 centrale et une seconde extrémité articulée sur une première bague 27, 28 de liaison respective disposée autour d'un soufflet 130, 131 respectif. De plus, chaque cardan peut comprendre une seconde paire de bras de liaison 22, 24 respectifs ayant une première extrémité articulée 18, 20 sur la première bague 27, 28 de liaison respective, et une seconde extrémité 122 reliée rigidement (soudage ou autre) à un côté concerné de l'enveloppe 2 extérieure.

C'est-à-dire que les deux cardans sont reliés à la portion rigide 26 centrale de façon symétrique par rapport à la partie centrale de cette dernière.

Le deux bras de chaque première paire de bras 23, 25 sont par exemple situés selon l'axe longitudinal (x) et disposés de façon diamétralement opposée autour de l'enveloppe extérieure 2.

De même, les deux bras de chaque seconde paire de bras 22, 24 sont par exemple situés selon l'axe longitudinal (x) et disposée de façon diamétralement opposée autour de l'enveloppe extérieure 2.

Pour encore améliorer la stabilité du mécanisme de cardans, selon la direction longitudinale (x), les deux premiers axes d'articulations 18, 20 sont situés de préférence entre les deux seconds axes d'articulations 19, 21. C'est-à-dire que longitudinalement, les deux premiers axes de rotation horizontaux 18, 20 (parallèles à la direction z) sont situés entre les deux seconds axes de rotation verticaux 19, 21 (parallèles à la direction y). La figure 6 représente les espacements D longitudinaux entre les axes d'un même cadran. Cet espacement est compris de préférence entre 20mm et 50mm. Cette configuration créé une résultante d'effort sur le mécanisme de cardan tendant à maintenir le mécanisme de cardans stable dans la position rectiligne. Ce décalage crée des efforts positifs favorables à la stabilité du système dans une position stable rectiligne. C'est-à-dire que, de cette façon, à défaut d'une contrainte déterminée, la canalisation tend à rester rectiligne et non pas à adopter une déformation en S sous sont propre poids.

Comme visible à la figure 1 notamment, la zone élastique peut comprendre une troisième portion 30 élastique de la au moins une conduite 3 interne. La troisième portion 30 élastique est située par exemple entre le mécanisme 17 de cadrans et une liaison rigide 29 entre l'enveloppe extérieure 2 et la au moins une conduite 3 interne (au niveau de la seconde extrémité 7).

Cette troisième portion 30 élastique permet de compenser des différentiels de longueur des conduites 3 interne lors d'un déplacement dans les directions transversales (y) ou (z). De plus, cette troisième portion 30 élastique permet de compenser les variations de longueurs dues à des changements de température (exemple : contraction des conduites 3 internes lors d'une mise en froid entre deux points fixes 29, 9).

Comme illustré aux figures 3 à 5 notamment, la troisième portion 30 élastique comprend par exemple un soufflet sur la ou les conduites 3 internes.

De préférence, une différence de section est prévue entre d'une part les flexibles 140, 141 de la seconde portion flexible et, d'autre part le soufflet 30 pour conserver une tension dans les ondes de soufflet pour résister à la pression interne.

En l'absence de contraintes, la canalisation a une forme générale rectiligne. En revanche, en cas de déplacements relatifs entre ses extrémités et/ou en ce cas de dilatations différentielles des conduites 3 et enveloppes 2 la structure décrite ci-dessus autorise une déformation localisée limitée de l'enveloppe externe 2 et des conduites internes 3 (par exemple en forme de S verticalement ou latéralement), pour rattraper ces différences sans abîmer la canalisation.

Le dispositif transfert selon l'invention permet ainsi de conférer à une canalisation rectiligne un système permettant d'absorber des dilatations, des efforts du vent, de déplacements dus à des séismes.

Le dispositif selon l'invention permet ainsi d'éviter des tuyauteries coudées de type « manivelle » qui, outre les pertes charges additionnelles générées, sont très volumineuses.

Dans l'exemple de réalisation, la première portion élastique 10, 11, est distincte de la première portion flexible (séparée longitudinalement). Bien entendu, en variante, la portion élastique peut être située au niveau du mécanisme de cardans. Par exemple, les soufflets 13, 14 peuvent être remplacés par des flexibles élastiques longitudinalement et les cardans peuvent intégrer une portion élastique longitudinalement (par exemple au niveau des bras 22,23, 24, 25. C'est-à-dire que les portions flexibles et élastiques peuvent être confondues dans une même portion.

## Revendications

1. Dispositif de transfert de fluide entre deux extrémités destinées à être reliées respectivement à deux structures (5, 7) séparées telles que deux bâtiments distincts, le dispositif comprenant une canalisation rigide à double enveloppes s'étendant selon un axe longitudinal (x), la canalisation comprenant une enveloppe (2) extérieure abritant, dans son volume interne destiné à être mis sous vide, au moins une conduite (3) interne de transfert de fluide, la canalisation comprenant, à une première extrémité, une première liaison (4) rigide de l'enveloppe (2) extérieure avec la première structure (5) et, à une seconde extrémité, une seconde liaison (6) rigide de l'enveloppe (2) extérieure avec la seconde structure (7), les première et seconde extrémités de l'enveloppe (2) extérieure étant reliées rigidement à la au moins une conduite (3) interne, la canalisation comportant un système de rattrapage de déplacements relatifs entre ses première (4) et seconde extrémités (6) comprenant au moins une zone (13, 14) flexible et au moins une zone (10, 11, 30) élastique, ladite au moins une zone (10, 11, 30) élastique étant élastique selon la direction longitudinale (x), le système de rattrapage de déplacements comprenant en outre une liaison coulissante (12) selon l'axe longitudinal (x) entre l'enveloppe (2) extérieure et la première structure (5) et un mécanisme (17) de cardans contenant deux cardans et reliant mécaniquement les deux extrémité de la zone flexible (13, 14).

2. Dispositif selon la revendication 1, **caractérisé en ce que** les deux cardans ont chacun deux axes d'articulation (18, 20, 19, 21) distincts perpendiculaires à l'axe longitudinal (x).

3. Dispositif selon la revendication 2, **caractérisé en ce que** l'un des deux cardans (22, 23) possède deux axes d'articulations (18, 19) parallèles respectivement aux deux axes d'articulations (20, 21) de l'autre cardan (24, 25).

4. Dispositif selon la revendication 2 ou 3, **caractérisé en ce que** lorsque le dispositif est en position montée, deux premiers axes d'articulations (18, 20) parallèles des cardans sont situés dans un plan vertical pour autoriser un débattement horizontal (direction y) limité de la canalisation tandis que les deux autres seconds axes d'articulations (19, 21) parallèles sont situés dans un plan horizontal pour autoriser un débattement vertical (direction z) limité de la zone (13, 14) flexible de la canalisation.

5. Dispositif selon la revendication 4, **caractérisé en ce que**, selon la direction longitudinale (x), les deux premiers axes d'articulations (18, 20) sont situés entre les deux seconds axes d'articulations (19, 21).

6. Dispositif selon l'une quelconque des revendications 1 à 5, **caractérisé en ce que** la zone (10, 11, 30) élastique comprend une première portion (10) élastique de l'enveloppe extérieure (2) et une première portion élastique (11) de la au moins une conduite (3) interne, ladite portion élastique (11) de la au moins une conduite (3) interne étant située entre deux liaisons rigides (8, 9) entre l'enveloppe extérieure (2) et la au moins une conduite (3) interne.

7. Dispositif selon la revendication 6, **caractérisé en ce que** la première portion (10) élastique de l'enveloppe extérieure (2) et la première portion élastique (11) de la au moins une conduite (3) interne comprennent chacune un soufflet élastique.

8. Dispositif selon l'une quelconque des revendications 1 à 7, **caractérisé en ce que** la zone (13, 14) flexible comprend une seconde portion (13) flexible et élastique de l'enveloppe extérieure (2) et une seconde portion (14) flexible de la au moins une conduite (3) interne, et **en ce que** le mécanisme (17) de cardans relie les deux extrémités de l'enveloppe extérieure (2) situées respectivement de part et d'autre de la seconde portion (13) flexible et élastique de l'enveloppe extérieure (2).

9. Dispositif selon la revendication 8, **caractérisé en ce que** la seconde portion (13) flexible et élastique de l'enveloppe extérieure (2) comprend deux soufflets (130, 131) raccordés en série de part et d'autre d'une portion rigide (26) centrale.

10. Dispositif selon la revendication 8 ou 9, **caractérisé en ce que** la seconde portion (14) flexible de la au moins une conduite (3) interne comprend deux flexibles (140, 141) raccordés en série de part et d'autre d'une portion rigide (126) centrale.

11. Dispositif selon la revendication 9 ou 10, **caractérisé en ce qu'**un premier cardan relie la portion rigide (26) centrale de l'enveloppe (2) extérieure à un premier côté de l'enveloppe extérieure (2) orienté vers la première structure (5) tandis qu'un second cadrant relie la portion rigide (26) centrale de l'enveloppe (2) extérieure à second côté de l'enveloppe extérieure (2) orienté vers la seconde structure (7).

12. Dispositif selon l'une quelconque des revendication 9 à 11, **caractérisé en ce que** chaque cardan comprend une première paire de bras de liaison (23, 35) respectifs ayant une première extrémité (123, 125) reliée rigidement à la portion rigide (26) centrale et une seconde extrémité articulée sur une première bague (27, 28) de liaison respective disposée autour d'un flexible (130, 131) respectif, chaque cardan comprenant une seconde paire de bras de liaison (22, 24) respectifs ayant une première extrémité articulée (18, 20) sur la première bague (27, 28) de liaison respective, et une second extrémité (122) reliée rigidement à un côté concerné de l'enveloppe (2) extérieure.

13. Dispositif selon l'une quelconque des revendications 8 à 12, **caractérisé en ce que**, de part et d'autre de la seconde portion (14) flexible de la au moins une conduite (3) interne, la au moins une conduite (3) interne est reliée à l'enveloppe extérieure (2) via des liaisons respectives coulissantes (15, 16) selon une direction parallèle à l'axe longitudinal (x) de la canalisation, c'est-à-dire que la seconde portion (13) flexible de l'enveloppe extérieure (2) et la seconde portion (14) flexible de la au moins une conduite (3) interne sont situées entre deux liaisons (15, 16) coulissantes entre l'enveloppe extérieure (2) et la au moins une conduite (3) interne.

14. Dispositif selon l'une quelconque des revendications 1 à 13, **caractérisé en ce que** la zone (10, 11, 30) élastique comprend une troisième portion (30) élastique de la au moins une conduite (3) interne.

15. Installation comprenant deux structures (4, 7) séparées reliée par un dispositif de transfert de fluide conforme à l'une quelconque des revendications 1 à 14, **caractérisé en ce que** une première structure (5) comprend l'un parmi : un bâtiment, une source de fluide cryogénique, un pont, tandis que la seconde structure (7) comprend l'un parmi : un bâtiment, une enceinte abritant un appareil de génération d'un plasma du type « Tokamak ».

## Patentansprüche

1. Vorrichtung zur Übertragung von Fluid zwischen zwei Enden, die ausgelegt sind, um jeweils mit zwei getrennten Strukturen (5, 7) als zwei verschiedenen Gebäuden verbunden zu sein, wobei die Vorrichtung einen starren Kanal mit doppelten Hüllen umfasst, die sich gemäß einer Längsachse (x) erstrecken, wobei der Kanal eine äußere Hülle (2) umfasst, die in ihrem inneren Volumen, das ausgelegt ist, um einem Vakuum ausgesetzt zu werden, mindestens eine innere Leitung (3) zur Übertragung von Fluid umfasst, wobei der Kanal, an einem ersten Ende, eine erste starre Verbindung (4) der äußeren Hülle (2) mit der ersten Struktur (5) und, an einem zweiten Ende, eine zweite starre Verbindung (6) der äußeren Hülle (2) mit der zweiten Struktur (7) umfasst, wobei das erste und das zweite Ende der äußeren Hülle (2) starr mit der mindestens einen inneren Leitung (3) verbunden sind, wobei der Kanal ein System zum Nachregulieren von relativen Verschiebungen zwischen seinem ersten (4) und zweiten Ende (6) umfasst, umfassend mindestens einen flexiblen Bereich (13, 14) und mindestens einen elastischen Bereich (10, 11, 30), wobei der mindestens eine elastische Bereich (10, 11, 30) gemäß der Längsrichtung (x) elastisch ist, wobei das System zum Nachregulieren von Verschiebungen außerdem eine gleitende Verbindung (12) gemäß der Längsachse (x) zwischen der äußeren Hülle (2) und der ersten Struktur (5) und einen Mechanismus (17) von Kardangelenken, enthaltend zwei Kardangelenke und verbindend die zwei Enden des flexiblen Bereichs (13, 14), umfasst.

2. Vorrichtung nach Anspruch 1, **dadurch gekennzeichnet, dass** die zwei Kardangelenke jeweils zwei verschiedene Gelenkachsen (18, 20, 19, 21) senkrecht zur Längsachse (x) aufweisen.

3. Vorrichtung nach Anspruch 2, **dadurch gekennzeichnet, dass** eines der zwei Kardangelenke (22, 23) zwei parallele Gelenkachsen (18, 19) mit Bezug auf die zwei Gelenkachsen (20, 21) des anderen Kardangelenks (24, 25) besitzt.

4. Vorrichtung nach Anspruch 2 oder 3, **dadurch gekennzeichnet, dass**, wenn sich die Vorrichtung in der montierten Position befindet, sich zwei erste parallele Gelenkachsen (18, 20) der Kardangelenke auf einer vertikalen Ebene befinden, um einen horizontalen Bewegungsraum (Richtung y), begrenzt vom Kanal, zu ermöglichen, während sich die zwei anderen parallelen Gelenkachsen (19, 21) auf einer horizontalen Ebene befinden, um einen vertikalen Bewegungsraum (Richtung z), begrenzt vom flexiblen Bereich (13, 14) des Kanals, zu ermöglichen.

5. Vorrichtung nach Anspruch 4, **dadurch gekennzeichnet, dass** gemäß der Längsrichtung (x) sich die zwei ersten Gelenkachsen (18, 20) zwischen den zwei zweiten Gelenkachsen (19, 21) befinden.

6. Vorrichtung nach einem der Ansprüche 1 bis 5, **dadurch gekennzeichnet, dass** der elastische Abschnitt (10, 11, 30) einen ersten elastischen Abschnitt (10) der äußeren Hülle (2) und einen ersten elastischen Abschnitt (11) der mindestens einen inneren Leitung (3) umfasst, wobei sich der elastische Abschnitt (11) der mindestens einen inneren Leitung (3) zwischen zwei starren Verbindungen (8, 9) zwischen der äußeren Hülle (2) und der mindestens einen inneren Leitung (3) befindet.

7. Vorrichtung nach Anspruch 6, **dadurch gekennzeichnet, dass** der erste elastische Abschnitt (10) der äußeren Hülle (2) und der erste elastische Abschnitt (11) der mindestens einen inneren Leitung (3) jeweils einen elastischen Balg umfassen.

8. Vorrichtung nach einem der Ansprüche 1 bis 7, **dadurch gekennzeichnet, dass** der flexible Bereich (13, 14) einen zweiten flexiblen und elastischen Abschnitt (13) der äußeren Hülle (2) und einen zweiten flexiblen Abschnitt (14) der mindestens einen inneren Leitung (3) umfasst, und dadurch, dass der Mechanismus der Kardangelenke (17) die zwei Enden der äußeren Hülle (2) verbindet, die sich jeweils auf beiden Seiten des zweiten flexiblen und elastischen Abschnitts (13) der äußeren Hülle (2) befinden.

9. Vorrichtung nach Anspruch 8, **dadurch gekennzeichnet, dass** der zweite flexible und elastische Abschnitt (13) der äußeren Hülle (2) zwei Bälge (130, 131) umfasst, die in Reihe auf beiden Seite eines zentralen starren Abschnitts (26) angeschlossen sind.

10. Vorrichtung nach Anspruch 8 oder 9, **dadurch gekennzeichnet, dass** der zweite flexible Abschnitt (14) der mindestens einen inneren Leitung (3) zwei Schläuche (140, 141) umfasst, die in Reihe auf beiden Seiten eines zentralen starren Abschnitts (126) verbunden sind.

11. Vorrichtung nach Anspruch 9 oder 10, **dadurch gekennzeichnet, dass** ein erstes Kardangelenk den zentralen starren Abschnitt (26) der äußeren Hülle (2) mit einer ersten Seite der äußeren Hülle (2) verbindet, die zur ersten Struktur (5) gerichtet ist, während ein zweites Kardangelenk den zentralen starren Abschnitt (26) der äußeren Hülle (2) mit der zweiten Seite der äußeren Hülle (2) verbindet, die zur zweiten Struktur (7) gerichtet ist.

12. Vorrichtung nach einem der Ansprüche 9 bis 11, **dadurch gekennzeichnet, dass** jedes Kardangelenk ein erstes Paar entsprechender Verbindungsarme (23, 35) umfasst, das ein erstes Ende (123, 125) aufweist, das starr mit dem zentralen starren Abschnitt (26) verbunden ist, und ein zweites Ende, das auf einem entsprechenden ersten Verbindungsring (27, 28) gelenkig verbunden ist, der um einen entsprechenden Schlauch (130, 131) angeordnet ist, wobei jedes Kardangelenk ein entsprechendes zweites Paar Verbindungsarme (22, 24) umfasst, das ein erstes Ende (18, 20) aufweist, das auf dem entsprechenden ersten Verbindungsring (27, 28) gelenkig verbunden ist, und ein zweites Ende (122), das starr mit einer betreffenden Seite der äußeren Hülle (2) verbunden ist.

13. Vorrichtung nach einem der Ansprüche 8 bis 12, **dadurch gekennzeichnet, dass** auf beiden Seiten des zweiten flexiblen Abschnitts (14) der mindestens einen inneren Leitung (3) die mindestens eine innere Leitung (3) mit der äußeren Hülle (2) über entsprechende gleitende Verbindungen (15, 16) gemäß einer parallelen Richtung zur Längsachse (x) des Kanals verbunden ist, d. h. dass der zweite flexible Abschnitt (13) der äußeren Hülle (2) und der zweite flexible Abschnitt (14) der mindestens einen inneren Leitung (3) sich zwischen zwei gleitenden Verbindungen (15, 16) zwischen der äußeren Hülle (2) und der mindestens einen inneren Leitung (3) befindet.

14. Vorrichtung nach einem der Ansprüche 1 bis 13, **dadurch gekennzeichnet, dass** der elastische Bereich (10, 11, 30) einen dritten elastischen Abschnitt (30) der mindestens einer inneren Leitung (3) umfasst.

15. Anlage, umfassend zwei getrennte Strukturen (4, 7), die durch eine Vorrichtung zur Übertragung von Fluid verbunden sind, nach einem der Ansprüche 1 bis 14, **dadurch gekennzeichnet, dass** eine erste Struktur (5) eines der folgenden umfasst: ein Gebäude, eine Quelle von kryogenem Fluid, eine Brücke, während die zweite Struktur (7) eines der folgenden umfasst: ein Gebäude, einen Raum, der ein Gerät zur Erzeugung eines Plasmas vom Typ "Tokamak" umfasst.

## Claims

1. Device for transferring fluid between two ends intended to be connected respectively to two separate structures (5, 7) such as two separate buildings, the device comprising a double-jacketed rigid pipe extending along a longitudinal axis (x), the pipe comprising an outer jacket (2) housing, in the inner volume thereof intended to be placed in a vacuum, at least one internal fluid transfer duct (3), the pipe comprising, at a first end, a first rigid connection (4) of the outer jacket (2) with the first structure (5) and, at a second end, a second rigid connection (6) of the outer jacket (2) with the second structure (7), the first and second ends of the jacket (2) being rigidly connected to the at least one internal duct (3), the pipe including a system for compensating for relative displacements between the first (4) and second ends (6) comprising at least one flexible zone (13, 14) and at least one elastic zone (10, 11, 30), said at least one elastic zone (10, 11, 30) being elastic along the longitudinal direction (x), the system for compensating for displacements further comprising a sliding connection (12) along the longitudinal axis (x) between the outer jacket (2) and the first structure (5) and a universal joint mechanism (17) containing two universal joints and mechanically connecting the two ends of the flexible zone (13, 14).

2. Device according to claim 1, **characterised in that** the two universal joints each have separate hinge axes (18, 20, 19, 21) perpendicular to the longitudinal axis (x).

3. Device according to claim 2, **characterised in that** one of the two universal joints (22, 23) has two hinge axes (18, 19) parallel respectively with the two hinge axes (20, 21) of the other universal joint (24, 25).

4. Device according to claim 2 or 3, **characterised in that**, when the device is in the assembled position, two first hinge axes (18, 20) parallel with the universal joints are situated in a vertical plane to allow a limited horizontal clearance (direction y) of the pipe whereas the two other second parallel hinge axes (19, 21) are situated in a horizontal plane to allow a limited vertical clearance (direction z) of the flexible zone (13, 14) of the pipe.

5. Device according to claim 4, **characterised in that**, along the longitudinal direction (x), the two first hinge axes (18, 20) are situated between the two second hinge axes (19, 21).

6. Device according to any one of claims 1 to 5, **characterised in that** the elastic zone (10, 11, 30) comprises a first elastic portion (10) of the outer jacket (2) and a first elastic portion (11) of the at least one internal duct (3), said elastic portion (11) of the at least one internal duct (3) being situated between two rigid connections (8, 9) between the outer jacket (2) and the at least one internal duct (3).

7. Device according to claim 6, **characterised in that** the first elastic portion (10) of the outer jacket (2) and the first elastic portion (11) of the at least one internal duct (3) each comprise an elastic bellows.

8. Device according to any one of claims 1 to 7, **characterised in that** the flexible zone (13, 14) comprises a second flexible and elastic portion (13) of the outer jacket (2) and a second flexible portion (14) of the at least one internal duct (3), and **in that** the universal joint mechanism (17) connects the two ends of the outer jacket (2) situated respectively on either side of the second flexible and elastic portion (13) of the outer jacket (2).

9. Device according to claim 8, **characterised in that** the second flexible and elastic portion (13) of the outer jacket (2) comprises two elastic bellows (130, 131) connected in series on either side of a central rigid portion (26).

10. Device according to claim 8 or 9, **characterised in that** the second flexible portion (14) of the at least one internal duct (3) comprises two flexible hoses (140, 141) connected in series on either side of a central rigid portion (126).

11. Device according to claim 9 or 10, **characterised in that** a first universal joint connects the central rigid portion (26) of the outer jacket (2) to a first side of the outer jacket (2) oriented towards the first structure (5) whereas a second universal joint connects the central rigid portion (26) of the outer jacket (2) to a second side of the outer jacket (2) oriented towards the second structure (7).

12. Device according to any one of claims 9 to 11, **characterised in that** each universal joint comprises a first pair of respective connecting arms (25, 35) having a first end (123, 125) rigidly connected to the central rigid portion (26) and a second end hinged on a first respective connecting ring (27, 28) arranged about a respective flexible hose (130, 131), each universal joint comprising a second pair of respective connecting arms (22, 24) having a first hinged end (18, 20) on the first respective connecting ring (27, 28), and a second end (122) rigidly connected to a side concerned of the outer jacket (2).

13. Device according to any one of claims 8 to 12, **characterised in that**, on either side of the second flexible portion (14) of the at least one internal duct (3), the at least one internal duct (3) is connected to the outer jacket (2) via respective sliding connections (15, 16) along a direction parallel with the longitudinal axis (x) of the pipe, i.e. the second flexible portion (13) of the outer jacket (2) and the second flexible portion (14) of the at least one internal duct (3) are situated between two sliding connections (15, 16) between the outer jacket (2) and the at least one internal duct (3).

14. Device according to any one of claims 1 to 13, **characterised in that** the elastic zone (10, 11, 30) comprises a third elastic portion (30) of the at least one internal duct (3).

15. Facility comprising two separate structures (4, 7) connected by a device for transferring fluid according to any one of claims 1 to 14, **characterised in that** a first structure (5) comprises one among: a building, a cryogenic fluid source, a deck, whereas a second structure (7) comprises one among: a building, an enclosure housing an apparatus for generating a plasma of the "Tokamak" type.
